# EUROPEAN PATENT APPLICATION

(11) **EP 3 282 637 A1**
(43) Date of publication of application: **14.02.2018**
(21) Application number: 17186071.1
(22) Date of filing: 11.08.2017
(51) Int. Cl.: H04L 9/00

(54) **EMERGENCY CALLBACK SYSTEM**

(30) Priority: 12.08.2016 US 201662374441 P
(71) Applicant: 9069569 Canada Inc., Ottawa, ON K2A 4E4 (CA)
(72) Inventor: Macy, Mark, Ottawa, Ontario K2A 2A1 (CA); Maclachlan, Ross, Ottawa, Ontario K2H 8J6 (CA)
(74) Representative: Dilg, Haeusler, Schindelmann Patentanwaltsgesellschaft mbH

(57) **Abstract**

An emergency call back system is described to enable off-duty officers to be contacted in emergency events. The officers can provide an estimated arrival time in response to the call back message from their mobile device and arrival time tracking can be performed to show when officers will arrive in response to the request. Contact information in the database is encrypted and can only be decrypted using a decryption key provided to a party external to the database provider.

## Description

### TECHNICAL FIELD

The present disclosure relates to emergency services and in particular to a system and method of managing resources in an emergency callback scenario for emergency services personnel.

### BACKGROUND

Emergency services such as police and military can encounter situations where personnel are required to report for work in response to a significant emergency or public safety event. When a request to return to work is sent to service personnel such as police officers, planning decisions on how to deploy the personnel can be problematic as systems for notification and tracking can be ad-hoc and not provide any indication of return time. In addition, the management of personal information required to contact the officers presents privacy concerns in the handling of the data. Accordingly, systems and methods that enable initiating and tracking emergency callback of personnel remains highly desirable.

### SUMMARY

In accordance with an aspect of the present disclosure there is provided a method of performing emergency call back, the method comprises: receiving an emergency call back initiation request at an emergency call back server; receiving a decryption key for a database associated with information of an organization for the emergency call back request; decrypting contact information in the database using the decryption key; generating call back message notification for at least one entry in the database; and sending the call back message notification to a messaging system.

In accordance with another aspect of the present disclosure there is provided a system for emergency call back comprising: a server for storing a call back database containing identification of personnel and encrypted contact information which is used to generate call back messaging notifications to one or more users, wherein responses from the one or more users is tracked to provide an estimated arrival time; and a second computing device storing a decryption key for the call back database remote from the server; wherein the decryption key is provided to the server to decrypt the encrypted contact information when an emergency event is initiated.

In accordance with yet another aspect of the present disclosure there is provided a non-transitory computer readable memory containing instructions which when executed by a processor of the emergency call back server cause the processor to perform: receive an emergency call back initiation request at the emergency call back server; receive a decryption key for a database associated with information of an organization for the emergency call back request; decrypting contact information in the database using the decryption key; generate call back message notification for at least one entry in the database; and send the call back message notification to a messaging system.

### BRIEF DESCRIPTION OF THE DRAWINGS

Further features and advantages of the present disclosure will become apparent from the following detailed description, taken in combination with the appended drawings, in which:
FIG. 1 shows a representation an emergency call back system;
FIG. 2 shows a representation of message flow in an emergency call back event;
FIG. 3 shows a method of emergency call back processing;
FIG. 4 shows a method of generating an emergency call back database; and
FIG. 5 shows a representation of a computing device for executing the emergency call back system.

It will be noted that throughout the appended drawings, like features are identified by like reference numerals.

### DETAILED DESCRIPTION

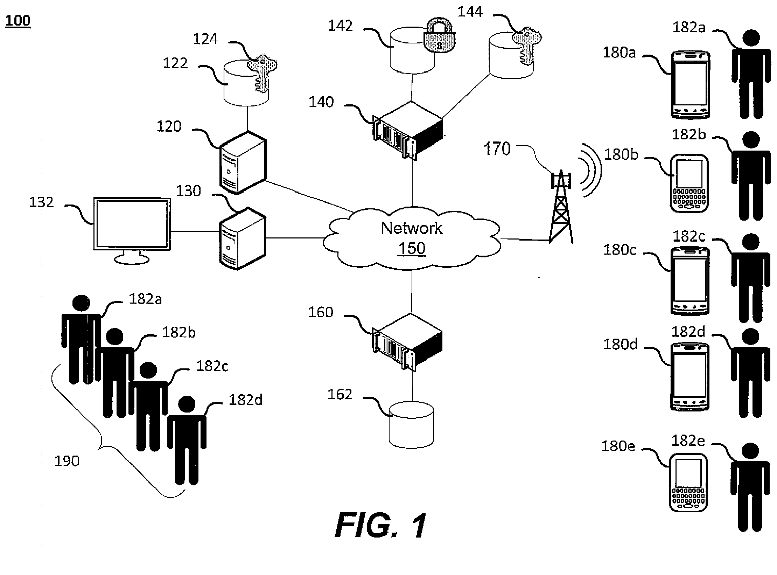

Embodiments are described below, by way of example only, with reference to Figs. 1-5.

The Emergency Call Back System (ECBS) is designed for times of crisis when every minute counts. It allows for proper planning and efficient deployment of personnel in emergency situations for first responder personnel such as police, fire, and EMS. The system may also be utilized military related applications such as emergency deployments of units where deployment times are critical to resource decisions.

Depending on the circumstance, the Emergency Call Back System can be used for specialized tactical units, public order units, platoons, divisions, or an entire agency. When activated the officers receive a direct message to their mobile phone with the emergency notification requesting a timeframe of their expected arrival to a specific staging location. This allows leadership to plan for the arrival of certain officers and supervisors and at specific intervals so they can be quickly staged and deployed where immediately required.

The system uses a double-key encryption protocol ensuring the system is protected and meets a trusted level for the service and each individual member. An encryption key is utilized to encrypt user data, particularly contact numbers whereas the decryption key is provided to a key holder to ensure only authorized access is provided to the contact numbers when a callback event is initiated. The system and method described utilizes a symmetric key and public key encryption scheme to encrypt to contact information to further ensure the integrity of the call back system.

FIG. 1 shows a representation an emergency call back system (ECBS) 100. The ECBS 100 enables leadership to determine when officers/personnel 182a-182e who are off-duty can report for duty in response to emergency event or crisis. The ability to know when officers 182a-182e will arrive enable deployment decisions to be more readily made when groups of officers 182a, 182b, 182c and 182d can be deployed 190 in defined groupings based upon their rank, skills and arrival times. The ECBS server 140 provides a secure location for storing personnel data in an encrypted database 142. The decryption key 124 is stored remotely from the ECBS server 140 such as for example on a storage device 122 coupled to a computing device 120 managed by the leadership of the emergency service and not the ECBS service provider. Access to the encrypted information is only possible when the decryption key is provided to the ECBS server 140 enabling access to be tracked and logged securely. In an embodiment a symmetric encryption key 144 is used to encrypt the personnel data which is then further encrypted by public encryption key 124. The decryption key must be provided in order to access the symmetric decryption key to access the user data. User data is provided by a management component generated by a computing device 120 provided from a storage device 122. The user data can identify items such as but not limited to an officer, a rank, an assignment, skills and contact information. The user data is uploaded to the ECBS 140 for encryption and storage of all or some of the data. Alternatively, the ECBS 140 may be provided with a token or a tracking identifier (or hash) by device 120 to access information stored in another data repository.

In an emergency requiring call back of personnel, a call back request can be initiated through a computing device 130 providing a web portal or application coupled to the ECBS server 140 through a communication network 150. Upon initiation of the request, a decryption key is provided, retrieved from device 120, or the ECBS server 140 may generate a permission request to an authorized user to enable access of the decryption key 124. The request may be a request for all personnel, a subset of personnel, personnel in particular rank, division, group or having particular skills. The relevant records are extracted by the ECBS server 140 and personal contact information is decrypted. Messaging requests are sent to messaging system 160 which provides an interface to cellular or landline networks 170. Messaging requests are received by messaging system 160 and converted to an appropriate format for the destination network for example short-message-service (SMS) mobile format and sent to the mobile network associated with the destination number for the destination devices 180a-180e. The message can comprise information describing an event, reason for call back, location of call back and a request for an estimated time of arrival. Predefined selections may be identified or an open selection of a response time may be provided. For example an officer may identify that they will be available for duty in 23 minutes, or may respond that they are unavailable for service by providing a predetermined code. In addition, the response dependent on the messaging protocol or messaging syntax utilized could include location information as to where the officer will be available to report to, such a rallying point. The contact information may define a mobile number, landline number or may be associated with an e-mail or application identifier if an associated web interface or application is implemented. If a mobile application is associated with the ECBS the officer may be able to provide select a set of predefined times 5, 10, 15, 20, 25 minutes etc., or more detailed ETA information. Additionally or alternatively, the officer may provide grid coordinate, staging area, sector, or division information to determine their relative location to their home staging point or alternate staging point. An initial response of an ETA may result in additional messaging to an officer to provide alternate or closest staging area and ETA. The web or application may also enable tracking of the mobile device to show their progress back to a rallying point or station. The messaging server 160 generates tokens to identify each message that has been sent to the recipients' 182a-182e and track responses provided by the recipients' 182a-182e. The token provides identification of the user which can be used by the ECBS 140 to track responses without the need to send personal information after the initial message generation. The messages such as SMS messages are sent via a cellular mobile network 170 to the mobile devices 180a-180e. As responses are received, tracking information can be displayed by computing device 130 on a display 132. The tracking information can identify officers' 182a-182e and their estimated arrival time at the desired location. Additional information may be retrieved from the personnel information 122 for enabling deployment decisions or display of capabilities of the responding officers.

The computing devices comprise at least a processor and a memory however, the functions described may be performed by a single device or distributed across multiple computing devices. Alternatively, functions of the ECBS 140 may be performed by a distributed to cloud computing service.

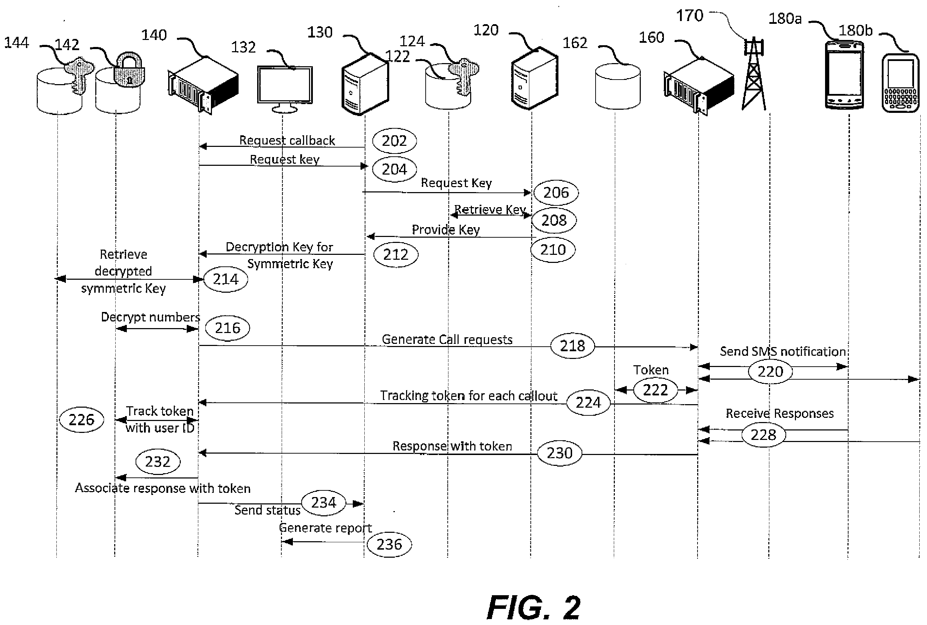

FIG. 2 shows a representation of message flow in an emergency call back event. A call back request is generated from a computing device 130 and sent to the ECBS 140 (202). The ECBS 140 provides authentication of the user making the request and verifies the resources required in the access request. To initiate the access request secondary authorization procedures may be required before initiating a call back event. A decryption key is requested (204) from a key server 120 (206). Alternatively, the key may be provided with the callback request (202) when initiating the process. The decryption key is retrieved (208) from storage 122 and provided to the computing device 130 (210). At the minimum level, only the phone number may be required to be encrypted within the system. The decryption key 124 for the symmetric key 144 is provided to the ECBS (212). The decrypted symmetric key 144 is retrieved from storage 144 (214) using the decryption key 124. The database data that has been encrypted for each user is then decrypted (216). Call messaging requests are then generated including parameters identified in the generation of the callback request (218). The parameters may include additional information required by the officer in determining their ability to respond to the request, such as required ETA, location, resources required etc. The call messaging requests are sent through an application programming interface (API) to a messaging service 160. The messaging service 160 provides an interface to networking infrastructure, such as mobile cellular network 170, which send wireless SMS notifications (220) to each of the mobile devices request callback status. A token associated with each user is generated and stored by the messaging system 160 (222) and provided to the ECBS server 140 (224) for association with a user identifier (226) in the database for subsequent tracking of messages. Responses are received from the mobile device 180a, 180b (228) identifying and estimated arrival time which is sent from the messaging system 160 to the ECBS 140 providing the associated token identification (228). The response is then associated with the user by the ECBS server 140 (230). The ECBS may then generate reports or provide report information to the requesting computing device 130 (232) which can then be displayed on display 132 (234). The reporting data may be periodically updated based upon the original ETA and may also generate officer grouping based upon expected times. Subsequent notifications may be generated to officers that have not been acknowledged as reporting in by the ETA or as further updates are received from returning officers. The SMS message may alternatively include a link to a web page or mobile application where ETA selections may be provided. The response from the web page or mobile application may utilized an SMS return channel or separate data return channel to relay information back to the ECBS 140 regarding the officer response to the callback request. If a landline or voice number is provided the messaging system 160 can convert messaging to interactive voice response system messages. The token provide an identifier which can be used by the messaging system to track request and used by the ECBS to associate messaging with a user without resending the contact number or additional identification information. The token does not contain any personally identifiable information.

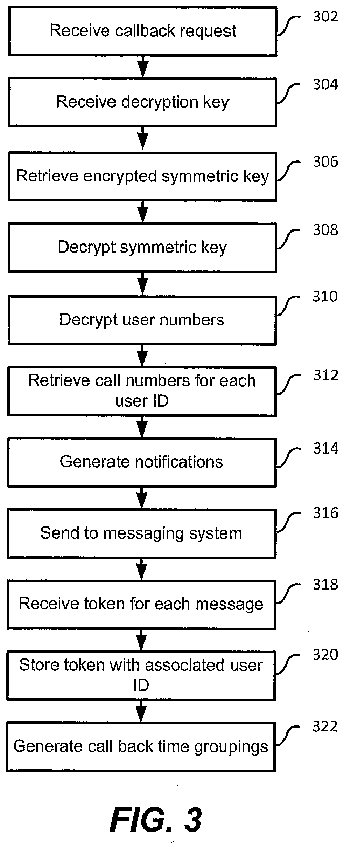

FIG. 3 shows a method of emergency call back processing. The call back generation request is received at the ECBS 140 (302). The decryption key is received or accessed (304) to decrypt a symmetric key (306) which was used to encrypt the contact information for the personnel in the database. The symmetric key is decrypted (308) and used to decrypt the contact numbers (310). The decrypted numbers are retrieved (312) to generate notification requests (314) using parameter information provided in the callback information. The notifications are then sent to the messaging system 120 (316) and token associations are received for each message (318) and stored in the database (320). The messages are sent to the contact numbers and replies from the specific contact numbers are processed to deter a response. The reply is provided in a structured format, for example a number of minutes but may also provide additional information such as closest staging area, personnel status, or a zone number dependent the parsing structure. Some variability in the response structure may be accommodated however additional messages may be sent to confirm the call back time received. Depending on the replay additional messages may be sent such as redirection to another precinct, staging area or zone or cancellation of the call back event. The notification may alternatively include a link to an application or web page on the mobile device to capture responses. Positioning information may be provided and generated from the device and provided with the response to further improve call back time estimates. The results are then provided to the request or call back grouping based upon the estimated arrival time may be generated by the ECBS 140 (322). Additional actions may be provided based upon the message

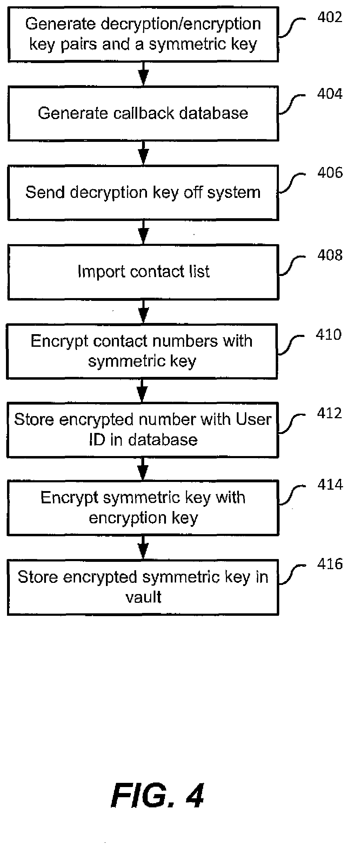

FIG. 4 shows a method of generating an emergency call back database. Encryption and decryption keys and a symmetric encryption key are generated (402) for the call back system. The call back database is generated (404). The decryption key is provided to the key holder off-site or remote from the ECBS 140 and removed from the system (406). The contact list can then be imported (408) if it was not provided when the database is created and the contact number is encrypted in the database using the encryption key (410) and stored with an associated user ID in the database (412). For modifications to entries in the database the content may be regenerated using the symmetric encryption key. The symmetric key is encrypted with the encryption key (410) and is stored in a storage vault (416).

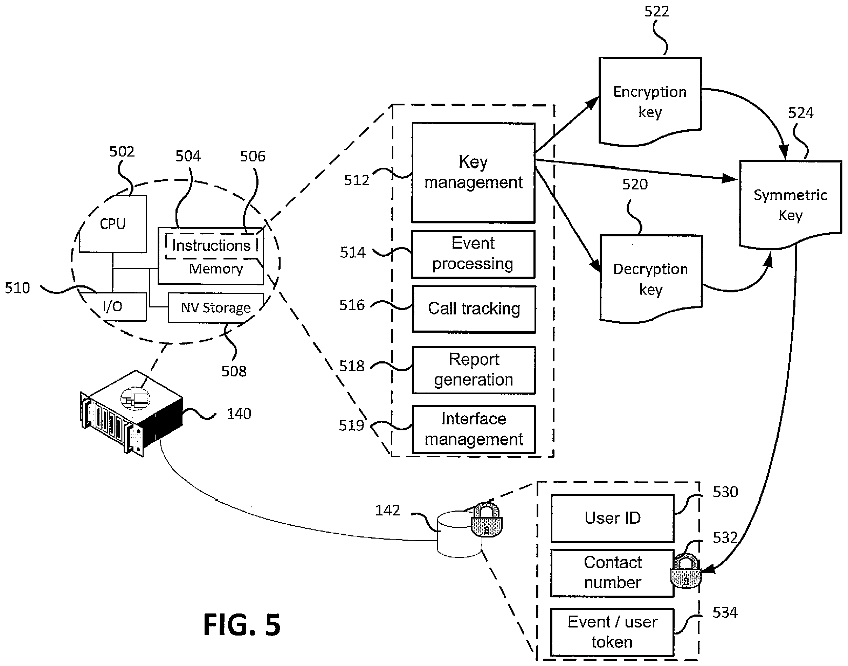

Figure 5 depicts components of a computing device for provide emergency call back processing. The computing system 140 comprises a processing unit 502 that can execute instructions to configure the computing system to provide various functionality. The computing system 500 further comprises a memory unit 504 for storing instructions 506. The computing system 500 may further comprise non-volatile storage 508 for storing instructions and or data as well as an input/output (I/O) interface 510 for connecting one or more additional peripherals to the computing system 500. The instructions, when executed by the processing unit 502, provides ECBS functionality for encrypting, decrypting, storing and processing call back functions. The instructions 506 can be dividing into functional units or modules to provide the ECBS. A key management component 512 generates the encryption key 522 and decryption key 520 for encrypting a symmetric key 524 which is used for encrypting/decrypting portions of the ECBS database 142. For example, the ECBS database 142 comprises user identifiers 530, encrypted contact number information 532 and may include entries for token or event association 534 to track active call back events. Event processing module 514 processes call back requests and initiated decryption of contact information to initiate messaging requests. The messaging requests can then be tracked by call tracking module 516 where particular user IDs can be associated with token from the messaging system. Reports can be generated by module 518 identifying user ETA grouping by estimated arrival time. An interface management module 519 can provide the application or web interface to manage data entry, encryption and report generation.

The data in the database 142 can be encrypted by encryption standards such as Triple-DES, Advanced Encryption Standard (AES), RSA, OpenPGP using hash standards such as SHA-1, SHA-2, HMAC, PBKDF2 or any similar standards. In addition, digital signatures may be used to track access or modification of data in the ECBS 140 or in tracking ECBS 140 or user access to the decryption key.

Each element in the embodiments of the present disclosure may be implemented as hardware, software/program, or any combination thereof. Software codes, either in its entirety or a part thereof, may be stored in a computer readable medium or memory (e.g., as a ROM, for example a non-volatile memory such as flash memory, CD ROM, DVD ROM, Blu-ray™, a semiconductor ROM, USB, or a magnetic recording medium, for example a hard disk). The program may be in the form of source code, object code, a code intermediate source and object code such as partially compiled form, or in any other form.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the system and method described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

It is understood that the specific order or hierarchy of steps in the processes disclosed is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

In various embodiments devices and nodes described herein are implemented using one or more components or modules to perform the steps corresponding to one or more methods, for example, has generation, transmitting, processing, and/or receiving steps. Thus, in some embodiments various features are implemented using components or modules. Such components or modules may be implemented using software, hardware or a combination of software and hardware. In some embodiments each component or module is implemented as an individual circuit with the device or system including a separate circuit for implementing the function corresponding to each described component or module. Many of the above described methods or method steps can be implemented using machine executable instructions, such as software, included in a machine readable medium such as a memory device, e.g., RAM, flash memory, ROM, etc. to control a machine, e.g., general purpose computer with or without additional hardware, to implement all or portions of the above described methods, e.g., in one or more nodes. Accordingly, among other things, various embodiments are directed to a machine-readable medium e.g., a non-transitory computer readable medium, including machine executable instructions for causing a machine, e.g., processor and/or associated hardware, to perform one or more or all of the steps of the above-described method(s). Some embodiments are directed to a device including a processor configured to implement one, multiple or all of the steps of one or more methods of the invention.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Various features in the present application relate to a technical problem of how to anonymize sensitive data and, in particular, how to anonymize sensitive data for use in a user interface, e.g., where the anonymized data maybe and sometimes will be displayed to a user.

Numerous additional variations on the methods and apparatus of the various embodiments described above will be apparent to those skilled in the art in view of the above description. Such variations are to be considered within the scope.

## Claims

1. A method of performing emergency call back, the method comprises:
receiving an emergency call back initiation request at an emergency call back server;
receiving a decryption key for a database associated with information of an organization for the emergency call back request;
decrypting contact information in the database using the decryption key;
generating call back message notification for at least one entry in the database; and
sending the call back message notification to a messaging system.

2. The method of claim 1 wherein receiving the decryption key further comprises:
requesting a first decryption key from the initiator of the call back initiation request;
retrieving an encrypted symmetric key associated with the database; and
decrypting the encrypted symmetric key using the first decryption key;
wherein decrypting the contact information in the database uses the symmetric key.

3. The method of claim 2 wherein the decryption key is a private decryption key.

4. The method of claim 3 wherein the symmetric key is encrypted using a public encryption key associated with the private decryption key.

5. The method of any one of claims 1 to 4 wherein the messaging system converts the call back message notification to an SMS message.

6. The method of claim 5 wherein the messaging system generates a token for each phone number associated with the call back message notification.

7. The method of claim 6 wherein the token is associated with each entry of the at least one entry in the database.

8. The method of claim 7 further comprising receiving a response from the SMS message from a recipient.

9. The method of claim 8 further comprising receiving the response and a token identifier.

10. The method of any one of claims 1 to 9 further comprising storing received responses to generate estimated arrival times.

11. The method of any one of claims 1 to 10 wherein the decryption key is stored remotely from the database.

12. The method of claim 1 further comprising receiving a token from the messaging system and associating the token with an associated recipient.

13. The method of claim 12 further comprising receiving subsequent responses form the call back messaging notification identified by the token, the response indicating a response time of the associated recipient.

14. A system for emergency call back comprising:
a server for storing a call back database containing identification of personnel and encrypted contact information which is used to generate call back messaging notifications to one or more users, wherein responses from the one or more users is tracked to provide an estimated arrival time; and
a second computing device storing a decryption key for the call back database remote from the server;
wherein the decryption key is provided to the server to decrypt the encrypted contact information when an emergency event is initiated.

15. A non-transitory computer readable memory containing instructions which when executed by a processor of the emergency call back server cause the processor to perform the method of claims 1 to 13.
